# EUROPÄISCHE PATENTSCHRIFT

(11) **EP 3 473 078 B1**
(45) Veröffentlichungstag und Bekanntmachung des Hinweises auf die Patenterteilung: **26.08.2020**
(21) Anmeldenummer: 18201018.1
(22) Anmeldetag: 17.10.2018
(51) Int. Cl.: A01D 78/10, A01D 78/12

(54) **HEUWERBUNGSMASCHINE**
HAYMAKING MACHINE
MACHINE DE FENAISON

(30) Priorität: 18.10.2017 DE 102017124239
(43) Veröffentlichungstag der Anmeldung: 24.04.2019
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- EP-A1- 0 979 600
- EP-A1- 2 194 770
- EP-A1- 2 250 874
- CH-A- 479 997

## Beschreibung

Die Erfindung betrifft eine Heuwerbungsmaschine nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt. Bei der erfindungsgemäßen Heuwerbungsmaschine handelt es sich insbesondere um einen Kreiselschwader.

EP 2 250 874 A1 betrifft eine Heuwerbungsmaschine mit wenigstens einem Rechkreisel mit wenigstens einem mit Rechzinken bestückten Zinkenarm, wobei der wenigstens eine Rechkreisel um eine vertikale Achse umlaufend angetrieben auf Stütz- und Tasträdern am Boden abgestützt ist und zum Zusammenrechen von am Boden liegenden landwirtschaftlichen Erntegut vorgesehen ist, und wobei die im Wesentlichen radiale Längserstreckung eines Zinkenarms durch Verschiebung des radial außenliegenden Teils relativ zum radial innenliegenden Teil veränderbar ist und der radial außenliegende Teil und der radial innenliegende Teil mittels einer Halterung lösbar miteinander verbunden sind, wobei die Halterung einen axialen Querversatz aufweist und der radial außenliegende Teil des Zinkenarms mit einer Kröpfung ausgestaltet ist, die dem axialen Querversatz der Halterung entspricht.

Aus der EP 2 194 770 A1 ist eine als Kreiselschwader ausgebildete Heuwerbungsmaschine mit mindestens einem Rechkreisel bekannt. Der Rechkreisel verfügt über Zinkenarme sowie über an den Zinkenarmen befestigte Rechzinken. Jeder Zinkenarm weist mehrere Biegungen auf, die bezogen auf eine Drehrichtung des Rechkreisels nach vorne oder bezogen auf die Drehrichtung des Rechkreisels nach hinten gerichtet sind. So weist nach diesem Stand der Technik jeder Zinkenarm von einem radial inneren Ende desselben in Richtung auf ein radial äußeres Ende desselben gesehen zunächst eine bezogen auf die Drehrichtung des Rechkreisels nach vorne gerichtete, erste Biegung und anschließend eine bezogen auf die Drehrichtung des Rechkreisels nach hinten gerichtete, zweite Biegung auf. In einem sich an die zweite Biegung radial außen anschließenden Abschnitt trägt der Zinkenarm mehrere Rechzinken.

Es besteht Bedarf daran, das mit der Heuwerbungsmaschine erzielbare Arbeitsergebnis zu verbessern, insbesondere bei einem Schwader das Erntegut zu einem besseren Schwad zu vereinigen.

Hiervon ausgehend liegt der vorliegenden Erfindung die Aufgabe zugrunde, eine neuartige Heuwerbungsmaschine zu schaffen.

Diese Aufgabe wird durch eine Heuwerbungsmaschine nach Anspruch 1 gelöst.

Jeder Zinkenarm weist von einem radial inneren Ende desselben in Richtung auf ein radial äußeres Ende desselben gesehen zunächst eine bezogen auf die Drehrichtung des Rechkreisels nach hinten gerichtete, erste Biegung und anschließend eine bezogen auf die Drehrichtung des Rechkreisels nach vorne gerichtete, zweite Biegung auf.

Jeder Zinkenarm trägt einerseits in einem zwischen der ersten Biegung und der zweiten Biegung verlaufenden ersten Abschnitt mindestens einen Rechzinken und andererseits in einem sich radial außen an den ersten Abschnitt anschließenden zweiten Abschnitt mehrere Rechzinken.

Bei der erfindungsgemäßen Heuwerbungsmaschine weist jeder Zinkenarm des jeweiligen Rechkreisels eine definierte Konturierung auf, ferner trägt der jeweilige Zinkenarm eine definierte Menge von Rechzinken. Mit einem solchen Rechkreisel bzw. einer solchen Heuwerbungsmaschine kann das erzielbare Arbeitsergebnis verbessert werden.

Nach einer vorteilhaften Weiterbildung trägt jeder Zinkenarm in dem zwischen der ersten Biegung und der zweiten Biegung verlaufenden ersten Abschnitt einen einzigen Rechzinken oder zwei Rechzinken und in dem sich radial außen an den ersten Abschnitt anschließenden zweiten Abschnitt zwei bis zehn Rechzinken, vorzugsweise drei bis oder acht Rechzinken, besonders bevorzugt vier bis sechs Rechzinken. Mit dieser Weiterbildung kann das erzielbare Arbeitsergebnis weiter verbessert werden.

Nach einer weiteren vorteilhaften Weiterbildung weist derjenige Abschnitt des jeweiligen Zinkenarms und damit der oder jede von demselben getragenen Rechzinken, der gegenüber einer Mittelachse des radial inneren Endes des jeweiligen Zinkenarms am weitesten nach hinten verlagert sind, von der Mittelachse einen Abstand zwischen 20 mm und 100 mm, bevorzugt einen Abstand zwischen 30 mm und 90 mm, besonders bevorzugt einen Abstand 40 mm und 80 mm, auf. Auch diese Details dienen der weiteren Verbesserung des mithilfe der Heuwerbungsmaschine erzielbaren Arbeitsergebnisses.

Nach einer weiteren vorteilhaften Weiterbildung ist eine freie Spitze jedes Rechzinkens in einer nach vertikal unten ausgerichteten Stellung gegenüber einer Mittelachse des den jeweiligen Rechzinken tragenden Abschnitts des jeweiligen Zinkenarms derart nach vorne verlagert, dass die freie Spitze des jeweiligen Rechzinkens auf oder vor einer Ebene liegt, die sich durch eine vordere Außenkante eines Federelements des jeweiligen Rechzinkens erstreckt. Auch hiermit kann das Arbeitsergebnis, das mit der Heuwerbungsmaschine erzielt werden kann, nochmals verbessert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines Rechkreisels einer erfindungsgemäßen, als Kreiselschwader ausgeführten Heuwerbungsmaschine;
- Fig. 2: eine perspektivische Ansicht eines ersten Zinkenarms mit mehreren Rechzinken,
- Fig. 3: eine Draufsicht auf den Zinkenarm der Fig. 2;
- Fig. 4: eine perspektivische Ansicht eines zweiten Zinkenarms mit mehreren Rechzinken;
- Fig. 5: eine Draufsicht auf den Zinkenarm der Fig. 4;
- Fig. 6: eine perspektivische Ansicht eines dritten Zinkenarms mit mehreren Rechzinken;
- Fig. 7: eine Draufsicht auf den Zinkenarm der Fig. 6;
- Fig. 8: eine Seitenansicht auf einen Rechzinken.

Die Erfindung betrifft eine Heuwerbungsmaschine, insbesondere eine als Kreiselschwader ausgebildete Heuwerbungsmaschine.

Es sei darauf hingewiesen, dass die erfindungsgemäße Heuwerbungsmaschine jedoch auch als Wender ausgebildet sein kann.

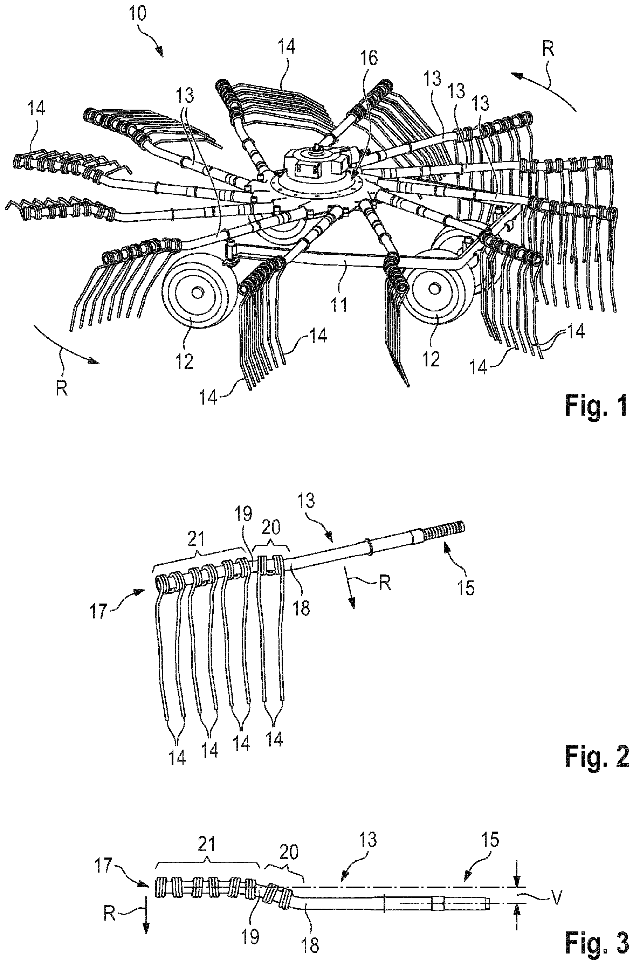

Fig. 1 zeigt eine perspektivische Ansicht eines Rechkreisels 10 einer als Kreiselschwader ausgebildeten Heuwerbungsmaschine. Der Rechkreisel 10 verfügt über ein Gestell 11 mit Rädern 12, über die sich der Rechkreisel 10 im Betrieb auf einem zu bearbeitenden Untergrund abstützt.

Der Rechkreisel 10 verfügt über mehrere Zinkenarme 13. Jeder Zinkenarm 13 trägt mehrere Rechzinken 14. Im Betrieb der Heuwerbungsmaschine dreht der Rechkreisel in der Drehrichtung R der Fig. 1, wobei hierbei auch die Zinkenarme 13 sowie die an den Zinkenarmen 13 montierten Rechzinken 14 in Drehrichtung R drehen bzw. rotieren. Bei dieser Rotation ändert sich dann, wenn die Heuwerbungsmaschine als Kreiselschwader ausgebildet ist, die Ausrichtung der Rechzinken 14 zum zu bearbeitenden Untergrund, und zwar derart, dass bei der Rotation der Zinkenarme 13 dieselben mithilfe einer nicht gezeigten Steuerungseinrichtung derart um eine Längsmittelachse der Zinkenarme 13 gedreht werden, dass die Rechzinken 14 zwischen in der Fig. 1 ganz rechts gezeigten, vertikal nach unten gerichteten Ausrichtung und der in Fig. 1 ganz links gezeigten, horizontal verlaufenden Ausrichtung verlagert werden.

Fig. 2 und 3 zeigen einen Zinkenarm 13 mit am Zinkenarm 13 gelagerten bzw. aufgenommenen Rechzinken 14.

Der in Fig. 2 und 3 gezeigte Zinkenarm 13 verfügt über ein bezogen auf den Rechkreisel 10 radial inneres Ende 15, mit dem der Zinkenarm 13 an einer Antriebseinheit 16 für die Zinkenarme 13 angreift. Ausgehend von diesem radial inneren Ende 15 erstreckt sich der Zinkenarm 13 nach radial außen in Richtung auf ein radial äußeres Ende 17. Jeder Zinkenarm 13 eines Rechkreisels 10 einer erfindungsgemäßen Heuwerbungsmaschine ist derart konturiert, dass der jeweilige Zinkenarm 13 ausgehend von dem radial inneren Ende 15 desselben gesehen in Richtung auf das radial äußere Ende 17 desselben zunächst eine bezogen auf die Drehrichtung R nach hinten gerichtete erste Biegung 18 und anschließend hieran, bezogen auf die Drehrichtung R des Rechzinkens 13 bzw. des Rechkreisels 10 nach vorne gerichtete, zweite Biegung 19 aufweist.

Jeder Zinkenarm 13 trägt in einem zwischen der ersten Biegung 18 und der zweiten Biegung 19 verlaufenden ersten Abschnitt 20 mindestens einen Rechzinken 14, in einem sich radial außen an diesen ersten Abschnitt 20 anschließenden zweiten Abschnitt 21 trägt der Zinkenarm 13 mehrere Rechzinken 14.

Im in Fig. 2 und 3 gezeigten Ausführungsbeispiel trägt der Rechzinken 13 im ersten Abschnitt 20 zwei Rechzinken 14, die von einem Zinkenpaar bereitgestellt sind. Im sich hieran anschließenden Abschnitt 21 trägt der Zinkenarm 13 der Fig. 2 und 3 sechs Rechzinken 14, die von drei Zinkenpaaren bereitgestellt sind.

Es ist möglich, dass der Zinkenarm 13 im ersten Abschnitt 20 zwischen den beiden Biegungen 18, 19 einen einzigen Rechzinken oder zwei Rechzinken trägt. Im sich an diesen ersten Abschnitt 20 radial außen anschließenden zweiten Abschnitt 21 kann der Zinkenarm 13 zwischen zwei und zehn, bevorzugt zwischen drei und acht, besonders bevorzugt zwischen vier und sechs, Rechzinken 14 tragen.

Im Ausführungsbeispiel der Fig. 2 und 3 erstreckt sich der radial außen an den ersten Abschnitt 20 anschließende zweite Abschnitt 21 des jeweiligen Zinkenarms 13 durchgehend geradlinig bis zum äußeren Ende 17 des Zinkenarms, wobei dieser radial äußere Abschnitt 21 des Zinkenarms 13 gegenüber dem radial inneren Ende 15 des Zinkenarms 13 parallel nach hinten, also gegenüber der Drehrichtung R gesehen parallel nach hinten, versetzt ist, sodass zwischen einer Längsmittelachse des radial inneren Endes 15 des Zinkenarms 13 und einer Längsmittelachse des Abschnitts 21 ein Versatz V besteht.

Der Versatz V liegt zwischen 20 mm und 100 mm, bevorzugt zwischen 30 mm und 90 mm, besonders bevorzugt zwischen 40 mm und 80 mm.

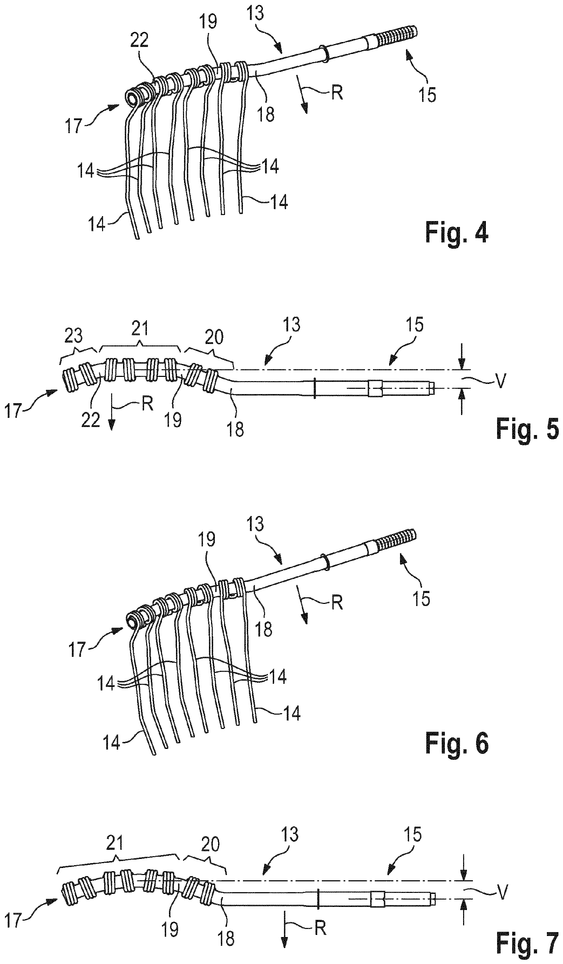

Fig. 4 und 5 zeigen Details eines weiteren Zinkenarms 13, der sich vom Zinkenarm der Fig. 2 und 3 dadurch unterscheidet, dass der Zinkenarm 13 zusätzlich zu den bereits beschriebenen Biegungen 18, 19 eine weitere nach vorne gerichtete, dritte Biegung 22 aufweist. Der Abschnitt 21, der gegenüber dem radial inneren Ende 15 des Zinkenarms 13 parallel nach hinten versetzt ist, erstreckt sich dann nicht durchgehend auf das äußere Ende 17 des Zinkenarms 13, sondern bis zum Bereich der dritten Biegung 22.

Ein sich an diese dritte Biegung 22 radial außen anschließender Abschnitt 23 des Zinkenarms 13 erstreckt sich nach vorne, entweder geradlinig oder gekrümmt.

Im Ausführungsbeispiel der Fig. 4 und 5 trägt der erste Abschnitt 20 zwei Rechzinken, der zweite Abschnitt 21 vier Rechzinken und der dritte Abschnitt 23 zwei Rechzinken, wobei jeweils zwei Rechzinken 14 wiederum von einem Zinkenpaar bereitgestellt werden.

Hinsichtlich aller übrigen Details stimmt der Zinkenarm 13 der Fig. 4 und 5 mit dem Zinkenarm 13 der Fig. 2 und 3 überein. Insbesondere liegt wiederum der Versatz V zwischen der Längsmittelachse des radial inneren Endes 15 des Zinkenarms 13 und der Längsmittelachse des zweiten Abschnitts 21 des Zinkenarms 13 vor, um die Rechzinken 14, die an diesem Abschnitt 21 des Zinkenarms 13 gelagert sind, um das Maß V nach hinten zu verlagern.

Eine weitere Variante eines Zinkenarms 13 zeigen Fig. 6 und 7. Der Zinkenarm 13 der Fig. 6 und 7 unterscheidet sich vom Zinkenarm 13 der Fig. 2 und 3 dadurch, dass beginnend mit der zweiten Biegung 19 der sich radial außen an den ersten Abschnitt 20 anschließende zweite Abschnitt 21 nicht geradlinig verläuft, sondern sich durchgehend gekrümmt in Richtung auf das radial äußere Ende 17 des Zinkenarms 13 erstreckt. Hinsichtlich aller übrigen Details kann auf die obigen Ausführungen verwiesen werden. Die am weitesten nach hinten verlagerten Rechzinken 14 des zweiten Abschnitts 21 sind um das Maß V gegenüber der Längsmittelachse des inneren Endes 17 des Zinkenarms 13 entgegengesetzt zur Drehrichtung R nach hinten verlagert.

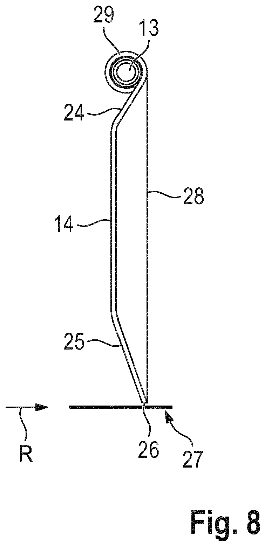

Eine weitere Besonderheit zeigt Fig. 8. Fig. 8 zeigt eine Seitenansicht auf einen an einem Zinkenarm 13 gelagerten Rechzinken 14. Der Rechzinken 14 greift mit einem ersten Abschnitt 24 über ein Federelement 29 am Zinkenarm 13 an, an einem gegenüberliegenden Abschnitt 25 ist eine freie Spitze 26 des Rechzinkens 14 ausgebildet, die in der in Fig. 8 gezeigten nach unten gerichteten Ausrichtung des Rechzinkens 14 einen minimalen Abstand zu einem zu bearbeitenden Untergrund 27 aufweist.

Der Rechzinken 14 ist derart konturiert, dass die freie Spitze 26 desselben gegenüber einer Mittelachse des Zinkenarms 13 in Drehrichtung R nach vorn verlagert ist, und zwar derart, dass die freie Spitze 26 des Zinkenarms 14 in der vertikal nach unten ausgerichteten Stellung des Rechzinkens 14 in Rotationsrichtung R gesehen etwa in einer Ebene 28 liegt, die sich durch eine vordere Außenkante des Federelements 29 des Rechzinkens 14 erstreckt. Hierdurch wird erreicht, dass dann, wenn der Rechzinken 14 bei der Recharbeit aufgrund der Belastung durch das Erntegut entgegen der Drehrichtung R sowie entgegen der Federkraft des Federelementes 29 nach hinten schwenkt, die freie Spitze 26 zunächst ihren Abstand zum zu bearbeitenden Untergrund 27 verringert und erst anschließend vergrößert, wodurch das Bearbeitungsergebnis, insbesondere Schwadergebnis, weiter verbessert werden kann. Die freie Spitze 26 kann dazu in einem Bereich liegen, der sich zwischen etwa 8 Millimetern vor und etwa 8 Millimetern hinter der Ebene 28 erstreckt.

### Bezugszeichenliste

- 10: Rechkreisel
- 11: Gestell
- 12: Rad
- 13: Zinkenarm
- 14: Rechzinken
- 15: inneres Ende
- 16: Antriebseinheit
- 17: äußeres Ende
- 18: erste Biegung
- 19: zweite Biegung
- 20: erster Abschnitt
- 21: zweiter Abschnitt
- 22: dritte Biegung
- 23: dritter Abschnitt
- 24: Abschnitt
- 25: Abschnitt
- 26: Spitze
- 27: Untergrund
- 28: Ebene
- 29: Federelement

## Patentansprüche

1. Heuwerbungsmaschine,
mit mindestens einem Rechkreisel (10), der an Zinkenarmen (13) aufgenommene Rechzinken (14) aufweist, wobei jeder Zinkenarm (13) von einem radial inneren Ende (15) desselben in Richtung auf ein radial äußeres Ende (17) desselben gesehen zunächst eine bezogen auf eine Drehrichtung (R) des Rechkreisels (10) nach hinten gerichtete, erste Biegung (18) und anschließend eine bezogen auf die Drehrichtung (R) des Rechkreisels (10) nach vorne gerichtete, zweite Biegung (19) aufweist, wobei zwischen der ersten Biegung (18) und der zweiten Biegung (19) ein erster Abschnitt (20) verläuft, dem sich radial außen ein zweiter Abschnitt (21) anschließt, der mehrere Rechzinken (14) aufnimmt,
**dadurch gekennzeichnet, dass**
jeder Zinkenarm (13) im zwischen der ersten Biegung (18) und der zweiten Biegung (19) verlaufenden ersten Abschnitt (20) mindestens einen Rechzinken (14) aufnimmt.

2. Heuwerbungsmaschine nach Anspruch 1, **dadurch gekennzeichnet, dass** jeder Zinkenarm (13) in dem zwischen der ersten Biegung (18) und der zweiten Biegung (19) verlaufenden ersten Abschnitt (20) einen einzigen Rechzinken (14) oder zwei Rechzinken (14) aufnimmt.

3. Heuwerbungsmaschine nach Anspruch 1 oder 2, **dadurch gekennzeichnet, dass** jeder Zinkenarm (13) in dem sich radial außen an den ersten Abschnitt (20) anschließenden zweiten Abschnitt (21) zwei bis zehn Rechzinken (14), vorzugsweise drei bis oder acht Rechzinken (14), besonders bevorzugt vier bis sechs Rechzinken (14), aufnimmt.

4. Heuwerbungsmaschine nach einem der Ansprüche 1 bis 3, **dadurch gekennzeichnet, dass** der sich radial außen an den ersten Abschnitt (20) anschließenden zweite Abschnitt (21) bis zum radial äußeren Ende (17) durchgehend geradlinig verläuft.

5. Heuwerbungsmaschine nach einem der Ansprüche 1 bis 3, **dadurch gekennzeichnet, dass** der sich radial außen an den ersten Abschnitt (20) anschließende zweite Abschnitt (21) bis zum radial äußeren Ende (17) durchgehend gekrümmt verläuft.

6. Heuwerbungsmaschine nach einem der Ansprüche 1 bis 3, **dadurch gekennzeichnet, dass** der sich radial außen an den ersten Abschnitt (20) anschließende zweite Abschnitt (21) geradlinig in Richtung auf eine weitere nach vorne gerichtete, dritte Biegung (23) erstreckt und radial außen anschließend hieran geradlinig oder gekrümmt verläuft.

7. Heuwerbungsmaschine nach einem der Ansprüche 1 bis 6, **dadurch gekennzeichnet, dass** derjenige Abschnitt des jeweiligen Zinkenarms, der gegenüber einer Mittelachse des radial inneren Endes (15) des jeweiligen Zinkenarms (13) am weitesten nach hinten verlagert sind, von der Mittelachse einen Abstand zwischen 20 mm und 100 mm, bevorzugt einen Abstand zwischen 30 mm und 90 mm, besonders bevorzugt einen Abstand 40 mm und 80 mm, aufweist.

8. Heuwerbungsmaschine nach einem der Ansprüche 1 bis 7, **dadurch gekennzeichnet, dass** jeweils zwei Rechzinken (14) von einem Zinkenpaar bereitgestellt sind.

9. Heuwerbungsmaschine nach einem der Ansprüche 1 bis 8, **dadurch gekennzeichnet, dass** eine freie Spitze (26) jedes Rechzinkens (14) in einer nach vertikal unten ausgerichteten Stellung gegenüber einer Mittelachse des den jeweiligen Rechzinken tragenden Abschnitts des jeweiligen Zinkenarms (13) derart nach vorn verlagert ist, dass die freie Spitze (26) des jeweiligen Rechzinkens (14) etwa in einer Ebene (28) liegt, die sich durch eine vordere Außenkante eines Federelements (29) des jeweiligen Rechzinkens (14) erstreckt.

10. Heuwerbungsmaschine nach einem der Ansprüche 1 bis 9, **dadurch gekennzeichnet, dass** dieselbe als Kreiselschwader ausgebildet ist.

## Claims

1. A haymaking machine comprising at least one raking rotor (10) having raking tines (14) carried on tine arms (13), wherein each tine arm (13) viewed from a radially inner end (15) thereof in the direction towards a radially outer end (17) thereof firstly has a first bend (18) directed rearwardly in relation to a direction of rotation (R) of the raking rotor (10) and then a second bend (19) directed forwardly in relation to the direction of rotation (R) of the raking rotor (10), wherein extending between the first bend (18) and the second bend (19) is a first portion (20) which is radially outwardly adjoined by a second portion (21) which carries a plurality of raking tines (14),
**characterised in that**
in the first portion (20) extending between the first bend (18) and the second bend (19) each tine arm (13) carries at least one raking tine (14).

2. A haymaking machine according to claim 1 **characterised in that** in the first portion (20) extending between the first bend (18) and the second bend (19) each tine arm (13) carries a single raking tine (14) or two raking tines (14).

3. A haymaking machine according to claim 1 or claim 2 **characterised in that** in the second portion (21) radially outwardly adjoining the first portion (20) each tine arm (13) carries two to ten raking tines (14), preferably three to eight raking tines (14), particularly preferably four to six raking tines (14).

4. A haymaking machine according to one of claims 1 to 3 **characterised in that** the second portion (21) radially outwardly adjoining the first portion (20) extends in a straight line continuously to the radially outer end (17).

5. A haymaking machine according to one of claims 1 to 3 **characterised in that** the second portion (21) radially outwardly adjoining the first portion (20) extends curvedly continuously to the radially outer end (17).

6. A haymaking machine according to one of claims 1 to 3 **characterised in that** the second portion (21) radially outwardly adjoining the first portion (20) extends in a straight line towards a further forwardly directed third bend (23) and radially outwardly adjoining same extends in a straight line or curvedly.

7. A haymaking machine according to one of claims 1 to 6 **characterised in that** that portion of the respective tine arm, that is displaced furthest rearwardly with respect to a central axis of the radially inner end (15) of the respective tine arm (13) is at a spacing from the central axis of between 20 mm and 100 mm, preferably a spacing of between 30 mm and 90 mm, particularly preferably a spacing of between 40 mm and 80 mm.

8. A haymaking machine according to one of claims 1 to 7 **characterised in that** two raking tines (14) are respectively provided by a tine pair.

9. A haymaking machine according to one of claims 1 to 8 **characterised in that** a free tip (26) of each raking tine (14) is displaced forwardly in a vertically downwardly directed position with respect to a central axis of the portion carrying the respective raking tine of the respective tine arm (13) in such a way that the free tip (26) of the respective raking tine (14) is approximately in a plane (28) extending through a front outer edge of a spring element (29) of the respective raking tine (14).

10. A haymaking machine according to one of claims 1 to 9 **characterised in that** same is in the form of a rotary swather.

## Revendications

1. Machine de fenaison, comprenant au moins un rotor de râtelage (10) qui comporte des dents de râtelage (14) reçues sur des bras porte-dents (13), chaque bras porte-dents (13) présentant, vu d'une extrémité intérieure radiale (15) de celui-ci en direction d'une extrémité extérieure radiale (17) de celui-ci, d'abord un premier coude (18) orienté vers l'arrière par rapport à un sens de rotation (R) du rotor de râtelage (10) et ensuite un deuxième coude (19) orienté vers l'avant par rapport au sens de rotation (R) du rotor de râtelage (10), entre le premier coude (18) et le deuxième coude (19) s'étendant une première portion (20) à laquelle se raccorde radialement vers l'extérieur une seconde portion (21) qui reçoit plusieurs dents de râtelage (14), **caractérisée en ce que** chaque bras porte-dents (13) reçoit, dans la première portion (20) s'étendant entre le premier coude (18) et le deuxième coude (19), au moins une dent de râtelage (14) .

2. Machine de fenaison selon la revendication 1, **caractérisée en ce que** chaque bras porte-dents (13) reçoit, dans la première portion (20) s'étendant entre le premier coude (18) et le deuxième coude (19), une seule dent de râtelage (14) ou deux dents de râtelage (14).

3. Machine de fenaison selon la revendication 1 ou 2, **caractérisée en ce que** chaque bras porte-dents (13) reçoit, dans la seconde portion (21) se raccordant radialement vers l'extérieur à la première portion (20), deux à dix dents de râtelage (14), préférentiellement trois jusqu'à ou huit dents de râtelage (14), particulièrement préférentiellement quatre à six dents de râtelage (14) .

4. Machine de fenaison selon une des revendications 1 à 3, **caractérisée en ce que** la seconde portion (21) se raccordant radialement vers l'extérieur à la première portion (20) s'étend en ligne droite continue jusqu'à l'extrémité extérieure radiale (17) .

5. Machine de fenaison selon une des revendications 1 à 3, **caractérisée en ce que** la seconde portion (21) se raccordant radialement vers l'extérieur à la première portion (20) s'étend en ligne courbe continue jusqu'à l'extrémité extérieure radiale (17) .

6. Machine de fenaison selon une des revendications 1 à 3, **caractérisée en ce que** la seconde portion (21) se raccordant radialement vers l'extérieur à la première portion (20) s'étend en ligne droite en direction d'un troisième coude (23) orienté vers l'avant et, ensuite, en ligne droite ou courbe radialement vers l'extérieur.

7. Machine de fenaison selon une des revendications 1 à 6, **caractérisée en ce que** la portion du bras porte-dents respectif qui, par rapport à un axe médian de l'extrémité intérieure radiale (15) du bras porte-dents respectif (13), est déportée le plus loin vers l'arrière, présente par rapport à l'axe médian une distance entre 20 mm et 100 mm, préférentiellement une distance entre 30 mm et 90 mm, particulièrement préférentiellement une distance entre 40 mm et 80 mm.

8. Machine de fenaison selon une des revendications 1 à 7, **caractérisée en ce que** deux dents de râtelage (14) sont respectivement fournies par une paire de dents.

9. Machine de fenaison selon une des revendications 1 à 8, **caractérisée en ce que**, dans une position orientée verticalement vers le bas, une pointe libre (26) de chaque dent de râtelage (14) est déportée vers l'avant par rapport à un axe médian de la portion du bras porte-dents (13) qui porte la dent de râtelage respective, de sorte que la pointe libre (26) de la dent de râtelage respective (14) se trouve sensiblement dans un plan (28) qui passe par un bord extérieur avant d'un élément élastique (29) de la dent de râtelage respective (14).

10. Machine de fenaison selon une des revendications 1 à 9, **caractérisée en ce qu'**elle est conçue sous la forme d'un andaineur rotatif.
